# NEW EUROPEAN PATENT SPECIFICATION

(11) **EP 2 947 995 B2**
(45) Date of publication and mention of the opposition decision: **07.05.2025**
(45) Mention of the grant of the patent: 31.05.2017
(21) Application number: 13713956.4
(22) Date of filing: 25.01.2013
(51) Int. Cl.: A23C 9/123, A23C 9/133

(54) **PROCESS FOR PREPARING STRAINED FERMENTED DAIRY PRODUCT**
VERFAHREN ZUR HERSTELLUNG EINES ENTWÄSSERTEN FERMENTIERTEN MILCHPRODUKTES
PROCÉDÉ DE FABRICATION D'UN PRODUIT LAITIER FERMENTÉ ET ÉGOUTTÉ

(43) Date of publication of application: 02.12.2015
(73) Proprietor: Compagnie Gervais Danone, 75009 Paris (FR); Danone, S.A., E-08029 Barcelona (ES)
(72) Inventor: WARIN, Françoise, E-28109 Madrid (ES); FLABBI, Paola, E-28027 Madrid (ES); CORRET, François, F-94300 Vincennes (FR); BILBAO, Almudena, E-28035 Madrid (ES); PAQUET, Denis, F-92140 Clamart (FR); CREPEL, Pascal, F-91190 Gif Sur Yvette (FR); MARCHAL, Laurent, F-91360 Villemoisson-sur-Orge (FR)
(74) Representative: Plasseraud IP
(86) International application number: PCT/IB2013/000162
(87) International publication number: WO 2014/114970

(56) References cited:
- EP-A1- 1 815 746
- WO-A1-2012/139632
- WO-A1-98/27825
- GB-A- 2 252 228
- US-A1- 2006 216 372
- ANONYMOUS: "Joghurt-Stretching - neues Verfahren zur Konsistenzeinstellung.", DEUTSCHE MILCHWIRTSCHAFT, vol. 46, no. 8, 1995, pages 421, XP009172951
- "Fermented Milks", 1 January 2006, BLACKWELL SCIENCE LTD, article B ÖZER: "6 Production of Concentrated Products", pages: 128 - 155, XP055045789
- TAMIME A Y ET AL: "RHEOLOGIE UND MIKROSTRUKTUR VON LABNEH NACH HERSTELLUNG AUS KUHMILCH MIT HILFE VON DREI VERSCHIEDENEN VERFAHREN", MILCHWISSENSCHAFT, VV GMBH VOLKSWIRTSCHAFTLICHER VERLAG. MUNCHEN, DE, vol. 45, no. 9, 1 January 1990 (1990-01-01), pages 612, XP000164653, ISSN: 0026-3788
- HAGGAG H F ET AL: "PRODUCTION OF ZABADI, FROM ULTRAFILTERED BUFFALO'S MILK", FOOD CHEMISTRY, ELSEVIER LTD, NL, vol. 30, no. 1, 1 January 1988 (1988-01-01), pages 29 - 36, XP000572051, ISSN: 0308-8146, DOI: 10.1016/0308-8146(88)90021-0

## Description

The present invention relates to the field of strained/concentrated fermented dairy product and its process of preparation. The invention further relates to a process for the preparation of strained fermented dairy products with improved texture.

The strained fermented dairy products are well known, in particular in Europe under the name of the Greek style yogurt or "thick" yogurt. Generally, these products have a high fat content (around 10g/100g) and they are placed in the category of greedy products with a creamy flavor. It is a pervasive goal in the human diet to consume less fat; and the relative high fat content of a typical Greek style yogurt is not helpful in achieving this goal. Countless attempts have been made to make a low fat Greek style yogurt, but the resulting products on the market are not satisfactory in term of taste, appearance and texture. Different methods can be used for the manufacture of strained fermented dairy products. The different methods available to manufacture strained yogurt in large volume are as follows: cloth bag or the "berge" system, mechanical separators and ultrafiltration. Generally, Greek style yogurts are manufactured from only pasteurized milk and lactic acid bacteria cultures. The milk may be concentrated by ultrafiltration to remove a portion of the water before addition of lactic acid bacteria. After fermentation, the product may be centrifuged or membrane-filtered to remove whey. It is known from literature that yogurt may be subjected to an ultrafiltration process to increase the solids as required in certain types of yogurt such as Greek-style yogurt. This technology was borrowed from the cheese technology. For example, WO9827825 describes a method for preparing fresh cheese with a smooth texture and more than 13% of dry matter, which consists in: fermenting milk with at least a strain of thermophilic lactic bacterium, until a pH less than 4.9 is reached for obtaining a curd, and removing the resulting whey by continuous centrifugation.

However, surprisingly with the complete combined process developed and described in this invention, whose parameters have been clearly defined, the obtained strained fermented dairy products have an improved texture and excellent organoleptic properties.

Today, there is a need for a strained fermented dairy product combining a low fat content, a high protein content, a low acid taste, a good texture and a good stability in the time. In other words, the strained fermented dairy products according to the invention are complex, because they need to have in combination: a low fat content, a high protein content, a higher viscosity than standard yogurts, a weak post acidification in the end of the shelf life, a good lactic acid bacteria count until the end of the shelf life and excellent organoleptic properties. Excellent organoleptic properties consist in a creamy, a low acid and low astringent taste (the acidity in the mouth is considerably reduced) even with a low fat content and a good texture in spoon and in mouth.

The present invention provides a process for the manufacture of a strained fermented dairy product, comprising at least the following steps:
- a pre-heat treatment step at a temperature of from 75 to 95 °C of a dairy material having a fat content of from 0 to 2% by weight,
- a homogenization step at a pressure of from 25 bars to 300 bars of the said dairy material,
- a heat treatment step at a temperature of from 90 to 95 °C for 2 to 7 min,
- a fermentation step with at least *Streptococcus thermophilus* and *Lactobacillus delbrueckii subsp. bulgaricus* at a temperature of from 35 to 44 °C, during 4 to 7 hours,
- a heat treatment step at a temperature of from 50 to 65 °C during from 1 to 10 min,
- a separation step wherein said separation step is performed by a separator at a temperature of from 30 to 45°C, to obtain a strained fermented dairy product wherein the total content of protein is between 6 and 14 g/100g of product,
- a smoothing step performed by a rotor stator mixer,
- a cooling step to a temperature of from 15 to 20°C.

The dairy material has a fat content of from 0 to 2%, in particular from 0,05 to 1 %. more particularly from 0,1 to 0,3% by weight and a protein content of from 3 to 4.6 %, in particular from 3,1 to 4%, more from 3,2 to 3,6% by weight.

In the context of the invention, the expression "dairy material" refers to milk, milk derivate or mixtures thereof. The milk is selected from skimmed milk, semi-skimmed milk, and mixtures thereof. The milk derivate is selected from skimmed milk powder, milk proteins, milk protein concentrate, concentrated milk, and mixtures thereof. The dairy material to be used in the method of the invention can derive from any milk such as cow's milk, sheep's milk, goat's milk. In a preferred embodiment of the process of the invention, the dairy material comes from cow's milk.

The high pressure homogenization precedes the heat treatment step. The high pressure homogenization step is typically performed in an equipment appropriate which can be selected by the skilled in the art. Preferably, the high pressure homogenization step is performed by compressing at a high pressure a stream of material in a chamber, then by decreasing instantaneously the pressure by letting the stream of material going through a small gap between a cylinder and a valve. This applies a high shearing on the material. This process is continuous and applied by a large variety of equipments called high pressure homogenizers. The homogenization step, according to the invention, seems to make it possible to improve the separation step. It was noted in the invention, that the protein concentration (the rate of protein enrichment) in the step of separation is improved when the homogenization step is performed, according to the invention.

The fermentation step is done with yogurt bacteria, *Streptococcus thermophilus* and *Lactobacillus delbrueckii subsp. bulgaricus.* Optionally, the fermentation step also includes the addition of other lactic acid bacteria, such as *Bifidobacterium* and/or *Lactobacillus acidophilus* and/or *Lactobacillus casei* and/or *Lactobacillus rhamnosus* and/or *Lactobacillus reuteri* and/or *Lactobacillus johnsonii* and/ or *Lactobacillus plantarum* and/or *Lactobacillus helveticus* and /or *Lactobacillus fermentum* and/or *Lactobaciluus amylovorus* and/or *Lactoccocus lactis* and/or *Leuconostoc mesenteroides.* After inoculation of the dairy material, fermentation is conducted under the usual conditions suitable for growth of the inoculated bacteria. The fermentation is stopped when the fermentation medium reaches the desired target pH, in particular from 4 to 4,8, preferably 4,6. It is well known in the literature that starter cultures are primarily responsible for the production of the flavor compounds which contribute to the aroma of yoghurt. There is a general agreement that the aroma of flavor of yoghurt is basically due to the production of acetaldehyde and other unidentifiable compounds. Some other strains like the ones mentioned above can improve the organoleptic properties of yoghurt. In particular, *Lactococcus lactis* subsp. *lactis* produces diacetyl known to bring a creamy flavor in product. It was surprisingly found that the process according to the present invention makes it possible to produce a strained fermented dairy product having better taste (low acidic off notes, high creamy note...) without using other lactic acid bacteria such as *Bifidobacterium, Lactobacillus acidophilus, Lactobacillus casei, Lactobacillus rhamnosus or mesophilic lactic acid bacteria such as Lactoccocus lactis* known to improve the flavor of the product.

The separation step, according to the invention, describes a step of concentration of the solids of the product, in particular proteins to a desired solids or protein content (% by weight). The term "separator" designates a device selected among the group of equipments applying the following operation: reverse osmosis, ultrafiltration, centrifugal separation, and any device allowing to withdraw a part of the water or whey from the product.

In the context of the present invention, the "total protein content" means the total amount of milk proteins contained in the product. In particular, the separation step is performed to obtain a total protein content at the end of this step between 6 and 14 g/100g of product, in particular 8 and 11 g/100g of product. It has been noted by the inventors that the process according to the invention makes it possible to produce a strained fermented dairy product with a good viscosity and texture related to the presence of a protein content in the range above mentioned.

In a preferred embodiment, the separation step is performed until a rate of protein enrichment of 2 to 3 times the protein content of the dairy material. In the context of the present invention, the "rate of protein enrichment" means that the protein content of the initial dairy material is increased by 2 to 3 times. The skilled in the art can perfectly determine the protein content of the dairy material used and the protein content of the product obtained in (c).

In the present invention, the smoothing step is done by a rotor stator mixer. An example of description of this equipment is done in the patent application WO2007/095969. In the context of the invention, "rotor stator mixer" means an equipment in which the product goes through cogged rings, a part of the rings being static, the remaining part being in rotation at a set speed. This system of cogged rings partly static or in rotation applies a defined shearing to the product. Preferably, the rotor stator mixer comprises a ring shaped rotor and a ring shaped stator, each ring of the rotor and the stator being provided with radial slots having a given width, comprising adjusting the rotational speed of the rotor to adjust the peripheral velocity. The rotor may be operated so that the peripheral velocity is between 2 m/s and 13 m/s, in particular between 3 m/s and 5 m/s and more particularly between 3.6 m/s and 4 m/s.

The process according to the invention comprises a heat treatment of the product obtained in the fermentation step at a temperature of from 50 to 65°C during from 1 to 10 min, in particular at a temperature of 58°C during 2,5 min.

The process according to the invention comprises after the smoothing step, a cooling step of the product obtained in the smoothing step at a temperature of from 15 to 20°C.

In a particular embodiment, the process according to the invention comprises after the smoothing step and optionally after the cooling step, a step of addition of a cream material and/or a fruit preparation.

In the context of the invention, the "cream material" is selected among the group of: cream, mixture of milk and cream. In the context of the invention, the "fruit preparation" is selected among the group: fruit pieces in a matrix, fruit puree in a matrix, fruit puree, concentrated fruit puree, fruit compote, fruit juice, dried fruits. The fruit are selected from the group consisting of strawberry, blackberry, apricot, peach, raspberry, blueberry, pineapple, mango, banana, papaya, passion fruit, plum, pomelo, orange, kiwi, lemon, cherry, pear and apple.

In a particular embodiment, the cream material has a fat content of from 20 to 50 % by weight, in particular from 23 to 40 % by weight.

In a preferred embodiment, the cream material is prepared by at least the following steps:
- pre-heating at a temperature of 75 to 95°C, preferably of 75°C to 90 °C,
- homogenization of the pre-heated material obtained, in a single step at a pressure of 150 bars,
- heat treatment at 75 to 142°C for 10 sec to 6 min,
- cooling at 4 to 10°C.
In the context of the present invention, the cream material is stored at 4 to 10 °C for 1 to 48 hours.

The process according to the invention, comprises at least the following steps:
- a pre-heat treatment step at a temperature of from 75 to 95 °C of a dairy material, having a fat content of from 0 to 2% by weight,
- a homogenization step at a pressure of from 20 bars to 300 bars, in particular from 25 bars to 300 bars, in particular from 50 bars to 250 bars, of the said dairy material,
- a heat treatment step at a temperature of from 90 to 95 °C for 2 to 7 min,
- a fermentation step with at least *Streptococcus thermophilus* and *Lactobacillus delbrueckii subsp. bulgaricus* at a temperature of from 35 to 44°C, preferably of from 36 to 42°C, during 4 to 7 hours,
- a heat treatment step at a temperature of from 50 to 65 °C during from 1 to 10 min, in particular at a temperature of 58°C during 2,5 min,
- a separation step wherein said separation step is performed by a separator at a temperature of from 30 to 45°C, to obtain a strained fermented dairy product wherein the total content of protein is between 6 and 14 g/100g of product, in particular 8 and 11 g/100g of product,
- a smoothing step performed by a rotor stator mixer, in particular at a temperature of from 30°C to 45°C,
- a cooling step to a temperature of from 15 to 20°C.
A strained fermented dairy product is collected at the end of the process above mentioned.
In an additional embodiment, the process according to the invention is characterized by an addition step of a cream material and/or a fruit preparation. In this context, the strained fermented dairy product obtained has a fat content of from 0,5 to 5 % by weight, in particular from 2 to 2,9 % by weight.

The present invention also concerns a strained fermented dairy product obtainable by the process according to the invention, comprising by weight of final product:
- from 0 to 5 % of fat, in particular from 2 to 3,5 % of fat, more particularly 2,9% of fat, and
- from 6 to 12% of proteins, in particular from 7 to 10 % of proteins, more particularly 9% of proteins,
wherein said strained fermented dairy product:
- has from 1.10⁵ to 3.10⁶ cfu/ml of *Lactobacillus delbrueckii subsp. bulgaricus* and from 1.10⁸ to 3. 10⁹ cfu/ml of *Streptococcus thermophilus* during all the shelf life, in particular during 28 days
- has a pH of from 3,9 to 4,4 , in particular of from 3,95 to 4,3, more particularly of from 4 to 4,2,
- has a viscosity from 2000 to 7000 mPa.s⁻¹, in particular from 2200 to 6500 mPa.s⁻¹, more particularly from 2500 to 6000 mPa.s⁻¹, measured with a Rheomat RM 200 at a temperature of 10°C and at a shear of 64 s⁻¹.

It has been noted by the inventors that the strained dairy product already disclosed or available to date have an acidity too high to be suitable for the taste of Westerns consumers, in particular European consumers. Consequently, the inventors sought to develop formulas with a sufficient viscosity and a less acid and more pleasant taste, for the consumer. In this context, they found that the acidity taste can be mitigated under certain specific conditions of formulas and process. The strained fermented dairy product according to the invention presents a low fat content, a high protein content, a higher viscosity than standard yogurts, a weak post acidification in the end of the shelf life, a good lactic acid bacteria count until the end of the shelf life and excellent organoleptic properties. Excellent organoleptic properties consists in a creamy, a low acid and low astringent taste (the acidity in the mouth is considerably reduced) even with a low fat content and a good texture in spoon and in mouth.

In a preferred embodiment, the strained fermented dairy product according to the invention comprises a white mass content of from 75 to 99,99 % by weight. By "white mass" is meant dairy material.

In a more preferred embodiment, the strained fermented dairy product according to the invention comprises a acid bacteria culture content of from 0,001 to 0,5 % by weight.

In a particular embodiment, the strained fermented dairy product according to the invention comprises a fruit preparation, wherein the fruits are selected from the group of cherry, strawberry, peach, blueberry, pineapple, raspberry, apricot, coconut, passion fruit, apple or a mixture.

The strained fermented dairy product according to the invention can have from 0 to 25 % by weight of fruit preparation. In a more particular embodiment, the strained fermented dairy product according to the invention comprises a cream material with a fat content of from 20 to 50 % by weight, in particular from 23 to 40% by weight.

In an even more particular embodiment, the strained fermented dairy product according to the invention has fat globules with an average diameter in the range from 0.05 to 10 µm, in particular from 1 µm to 2,5 µm.

Preferably, the strained fermented dairy product further comprises at least one additive chosen among sweeteners, flavors, flavor enhancers, sugar, preservatives and combinations thereof.

More preferably, the strained fermented dairy product is packaged in format size from 100 to 500g.

### FIGURES

This invention is illustrated by the following figures:
Figure 1: Figure 1 represents the kinetics of viscosity of the products A, B, C, D and E. The ordinate corresponds to the viscosity (mPa.s⁻¹) and the abscissa corresponds to the time (in days).
Figure 2: Figure 2 represents the kinetics of pH of the products A, B, C, D and E. The ordinate corresponds to the pH and the abscissa corresponds to the time (in days).
Figure 3: Figure 3 represents the count of bacteria in a strained fermented dairy product, inoculated with *Streptococcus thermophilus* (ST) and *Lactobacillus delbrueckii subsp. bulgaricus* (LB). The ordinate corresponds to the count (cfu/ml) and the abscissa corresponds to the time (in days). The black histogram is the count of *Streptococcus thermophilus.* The gray histogram is the count of *Lactobacillus delbrueckii subsp. bulgaricus.* The dark gray histogram is the total count of bacteria.
Figure 4: Figure 4 represents the sensory profile of a strained fermented dairy product according to the invention (fat content 3,5 %) and several commercial strained fermented dairy products (fat content 5%). The black line corresponds to the sensory profile of the product according to the invention. The gray zone corresponds to the sensory space of several commercial strained fermented dairy products.

Various embodiments of the present invention are illustrated in the following examples, which are intended to illustrate, without in any way limiting, the object and the scope of the invention.

### EXAMPLES

Strained fermented dairy products were prepared according to the process of the invention. The products had the following characteristics.

### 1) Viscosity and pH of strained fermented dairy products prepared according to the invention

| | Product A | Product B | Product C | Product D | Product E |
|---|---|---|---|---|---|
| Protein content (% by weight of final product) | 9,8 % | 9,4 % | 9,4 % | 9,4 % | 9,4 % |
| Fat content (% by weight of final product) | 0 % | 2 % | 2 % | 2 % | 2 % |
| Flavors | - | - | Vanilla | Strawberry | Blueberry |
| Viscosity after 1 day (mPas.s) | 2625 | 2632 | 3408 | 3332 | 3563 |
| Viscosity after 50 days (mPas.s) | 5600 | 3228 | 4639 | 5816 | 5033 |
| pH Day 1 | 4,28 | 4,30 | 4,29 | 4,26 | 4,27 |
| pH Day 50 | 4,08 | 3,94 | 4,07 | 4,04 | 4,01 |
| Dornic acidity after 1 Day | 146 | 129 | - | - | - |
| Dornic acidity after 45 Days | 170 | 142 | - | - | - |

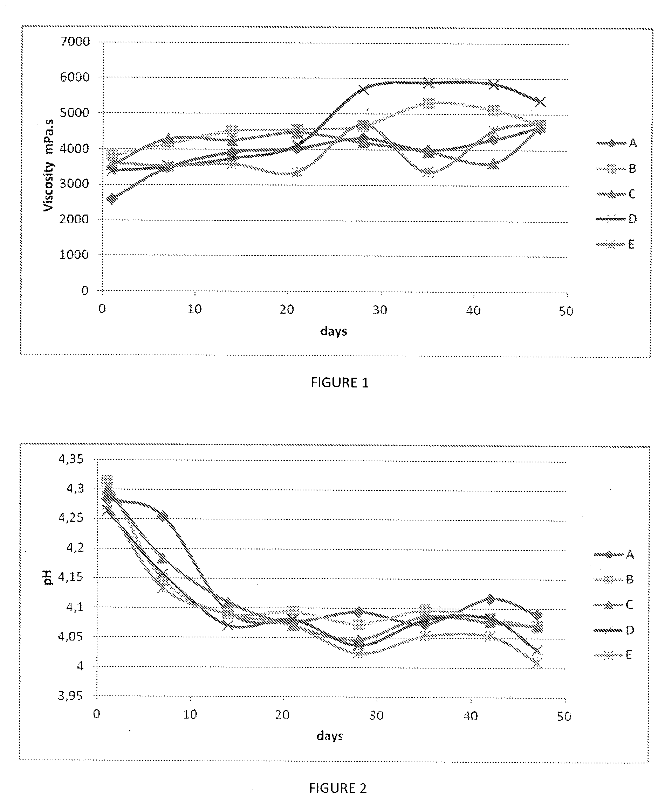

The viscosity has been measured with a Rheomat RM 200 at a shear rate of 64 s-1 and at 10 °C.
The pH has been measured at 10°C with a classical laboratory equipment.
The dornic acidity has been measured at 10°C with add of NaOH 0,1N until pH 8,35.
The results are illustrated by figures 1 and 2.

### 2) Count of bacteria (cfu/ml)

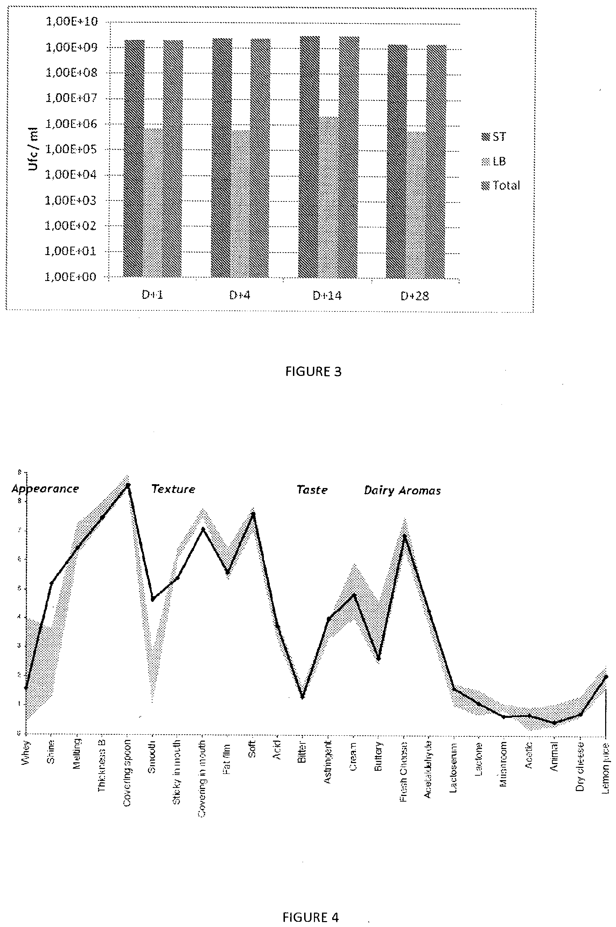

The count of bacteria has been done on a strained fermented dairy product prepared with a step of heat treatment (at a temperature of 58°C during 2,5 minutes) after the step of fermentation. The results are shown in figure 3.

### 3) Sensory profile

The strained fermented dairy product of the invention (X) and commercial strained fermented dairy products (Y) were analysis.
- Product (X) : 3,5 % of fat content
- Product (Y): 5 % of fat content

Analysis criteria: appearance, texture, taste, dairy aroma. For each criteria, characteristics are quantified (for example: smooth, sticky, acidic taste, cream note ....)

The results are shown in figure 4.

## Claims

1. A process for the manufacture of a strained fermented dairy product, comprising at least the following steps:
- a pre-heat treatment step at a temperature of from 75 to 95 °C of a dairy material having a fat content of from 0 to 2% by weight,
- a homogenization step at a pressure of from 25 bars to 300 bars of the said dairy material,
- a heat treatment step at a temperature of from 90 to 95 °C for 2 to 7 min,
- a fermentation step with at least *Streptococcus thermophilus* and *Lactobacillus delbrueckii subsp. bulgaricus* at a temperature of from 35 to 44 °C, during 4 to 7 hours,
- a heat treatment step at a temperature of from 50 to 65 °C during from 1 to 10 min,
- a separation step wherein said separation step is performed by a separator at a temperature of from 30 to 45°C, to obtain a strained fermented dairy product wherein the total content of protein is between 6 and 14 g/100g of product,
- a smoothing step performed by a rotor stator mixer,
- a cooling step to a temperature of from 15 to 20°C.

2. Process according to claim 1, wherein the dairy material has a fat content of from 0,05 to 1%, more particularly from 0,1 to 0,3% by weight.

3. Process according to claims 1 or 2, wherein the dairy material has a protein content of from 3 to 4.6 %, in particular from 3,1 to 4%, more from 3,2 to 3,6 % by weight.

4. Process according to any one of the preceding claims, **characterized in that** it comprises after the smoothing step (d) and optionally after the cooling step, a step of addition of a cream material and/or a fruit preparation.

5. Process according to any one of the preceding claims, wherein the cream material has a fat content of from 20 to 50 % by weight, in particular from 23 to 40 % by weight.

6. The process according to any one of the preceding claims, wherein the cream material is prepared by at least the following steps:
- pre-heating at a temperature of 75 to 95°C,
- homogenization of the pre-heated material obtained, in a single step at a pressure of 150 bars,
- heat treatment at 75 to 142°C for 10 sec to 6 min,
- cooling at 4 to 10°C.

7. The process according to any one of the preceding claims, comprising at least the following steps:
- a pre-heat treatment step at a temperature of from 75 to 95 °C of a dairy material,
- a homogenization step at a pressure of from 50 bars to 250 bars, of the said dairy material,
- a heat treatment step at a temperature of from 90 to 95 °C for 2 to 7 min,
- a fermentation step with at least *Streptococcus thermophilus* and *Lactobacillus delbrueckii subsp. bulgaricus* at a temperature of from 36 to 42 °C, during 4 to 7 hours,
- a heat treatment step at a temperature of of 58°C during 2,5 min,
- a separation step wherein said separation step is performed by a separator at a temperature of from 30 to 45°C, to obtain a strained fermented dairy product wherein the total content of protein is between 8 and 11 g/100g of product,
- a smoothing step performed by a rotor stator mixer at a temperature of from 30°C to 45°C,
- a cooling step to a temperature of from 15 to 20°C.

8. Strained fermented dairy product obtainable by the process according to any one of claims 1 to 7, comprising, by weight of final product:
- from 0 to 5 % of fat, in particular from 2 to 3,5 % of fat, more particularly 2,9% of fat, and
- from 6 to 12% of proteins, in particular from 7 to 10 % of proteins, more particularly 9% of proteins,
wherein said strained fermented dairy product:
- has from 1.10⁵ to 3.10⁶ cfu/ml of *Lactobacillus delbrueckii subsp. bulgaricus* and from 1.10⁸ to 3.10⁹ cfu/ml of *Streptococcus thermophilus* during all the shelf life, in particular during 28 days
- has a pH of from 3,9 to 4,4 , in particular of from 3,95 to 4,3, more particularly of from 4 to 4,2,
- has a viscosity from 2000 to 7000 mPa.s⁻¹, in particular from 2200 to 6500 mPa.s⁻¹, more particularly from 2500 to 6000 mPa.s⁻¹, measured with a Rheomat RM 200 at a temperature of 10°C and at a shear of 64 s⁻¹.

9. Strained fermented dairy product according to claim 8, having a white mass content of from 75 to 99,99 % by weight.

10. Strained fermented dairy product according to claims 8 or 9, having a lactic acid bacteria culture content of from 0,001 to 0,5 % by weight.

11. Strained fermented dairy product according to any one of claims 8 to 10, comprising a fruit preparation, wherein the fruits are selected from the group of cherry, strawberry, peach, blueberry, pineapple, raspberry, apricot, coconut, passion fruit, apple or a mixture.

12. Strained fermented dairy product according to any one of claims 8 to 11, having fat globules with an average diameter in the range from 0.05 to 10 µm, in particular from 1 µm to 2,5 µm.

## Patentansprüche

1. Verfahren zur Herstellung eines abgeseihten fermentierten Molkereiprodukts, umfassend mindestens die folgenden Schritte:
- einen Hitze-Vorbehandlungsschritt bei einer Temperatur von 75 bis 95 °C eines Molkereimaterials enthaltend einen Fettgehalt von 0 bis 2 Gew.-%,
- einen Homogenisierungsschritt bei einem Druck von 25 bar bis 300 bar des besagten Molkereimaterials,
- einen Hitzebehandlungsschritt bei einer Temperatur von 90 bis 95 °C für 2 bis 7 Minuten,
- einen Fermentationsschritt mit mindestens *Streptococcus thermophilus* und *Lactobacillus delbrueckii subsp. bulgaricus* bei einer Temperatur von 35 bis 44 °C, für 4 bis 7 Stunden,
- einen Hitzebehandlungsschritt bei einer Temperatur von 50 bis 65 °C für von 1 bis 10 min,
- einen Separationsschritt, wobei der Separationsschritt von einem Separator bei einer Temperatur von 30 bis 45 °C durchgeführt wird, um ein abgeseihtes fermentiertes Molkereiprodukt zu erhalten, wobei der Gesamtproteingehalt zwischen 6 und 14 g/100 g des Produkts liegt,
- einen Glättungsschritt, durchgeführt von einem Rotor-Stator-Mixer,
- einen Kühlungsschritt auf eine Temperatur von 15 bis 20 °C.

2. Verfahren nach Anspruch 1, wobei das Molkereimaterial einen Fettgehalt von 0,05 bis 1 Gew.-%, insbesondere von 0,1 bis 0,3 Gew.-% aufweist.

3. Verfahren nach Anspruch 1 oder 2, wobei das Molkereimaterial einen Proteingehalt von 3 bis 4,6 Gew.-%, insbesondere von 3,1 bis 4 Gew.-%, insbesondere von 3,2 bis 3,6 Gew.-% aufweist.

4. Verfahren nach einem der vorhergehenden Ansprüche, **dadurch gekennzeichnet, dass** es nach dem Glättungsschritt (d) und gegebenenfalls nach dem Kühlungsschritt einen Schritt der Zugabe eines Sahnematerials und/oder einer Fruchtzubereitung umfasst.

5. Verfahren nach einem der vorhergehenden Ansprüche, wobei das Sahnematerial einen Fettgehalt von 20 bis 50 Gew.-%, insbesondere von 23 bis 40 Gew.-% aufweist.

6. Verfahren nach einem der vorhergehenden Ansprüche, wobei das Sahnematerial hergestellt wird durch mindestens die folgenden Schritte:
- Vorwärmen bei einer Temperatur von 75 bis 95 °C,
- Homogenisation des erhaltenen vorgewärmten Materials in einem einzigen Schritt bei einem Druck von 150 bar,
- Hitzebehandlung bei 75 bis 142 °C für 10 sec bis 6 min,
- Kühlen bei 4 bis 10 °C.

7. Verfahren nach einem der vorhergehenden Ansprüche, umfassend mindestens die folgenden Schritte:
- einen Hitze-Vorbehandlungsschritt eines Molkereimaterials bei einer Temperatur von 75 bis 95 °C,
- einen Homogenisationsschritt des besagten Molkereimaterials bei einem Druck von 50 bar bis 250 bar,
- einen Hitzebehandlungsschritt bei einer Temperatur von 90 bis 95 °C für 2 bis 7 min,
- einen Fermentationsschritt mit mindestens *Streptococcus thermophilus* und *Lactobacillus delbrueckii subsp. bulgaricus* bei einer Temperatur von 36 bis 42 °C, für 4 bis 7 Stunden,
- einen Hitzebehandlungsschritt bei einer Temperatur von von 58 °C für 2,5 min,
- einen Separationsschritt, wobei der Separationsschritt von einem Separator bei einer Temperatur von 30 bis 45 °C durchgeführt wird, um ein abgeseihtes fermentiertes Molkereiprodukt zu erhalten, wobei der Gesamtproteingehalt zwischen 8 und 11 g/100 g des Produkts liegt,
- einen Glättungsschritt, durchgeführt von einem Rotor-Stator-Mixer bei einer Temperatur von 30 °C bis 45 °C,
- einen Kühlungsschritt auf eine Temperatur von 15 bis 20 °C.

8. Abgeseihtes fermentiertes Molkereiprodukt, erhältlich durch das Verfahren gemäß einem der Ansprüche 1 bis 7, umfassend, in Gewichtsanteilen des Endprodukts:
- von 0 bis 5 % Fett, insbesondere von 2 bis 3,5 % Fett, insbesondere 2,9 % Fett, und
- von 6 bis 12 % Proteine, insbesondere von 7 bis 10 % Proteine, insbesondere 9 % Proteine,
wobei das abgeseihte fermentierte Molkereiprodukt:
- von 1.10⁵ bis 3.10⁶ cfu/ml *Lactobacillus delbrueckii subsp. bulgaricus* und von 1.10⁸ bis 3.10⁹ cfu/ml *Streptococcus thermophilus* während der gesamten Haltbarkeit, insbesondere für 28 Tage, aufweist,
- einen pH-Wert von 3,9 bis 4,4, insbesondere von 3,95 bis 4,3, insbesondere von 4 bis 4,2 aufweist,
- eine Viskosität von 2000 bis 7000 mPa.s⁻¹, insbesondere von 2200 bis 6500 mPa.s⁻¹, insbesondere 2500 bis 6000 mPa.s⁻¹ aufweist, gemessen mit einem Rheomat RM 200 bei einer Temperatur von 10 °C und bei einer Scherung von 64 s⁻¹.

9. Abgeseihtes fermentiertes Molkereiprodukt nach Anspruch 8, das einen Gehalt an weißer Masse von 75 bis 99,99 Gew.-% aufweist.

10. Abgeseihtes fermentiertes Molkereiprodukt nach Anspruch 8 oder 9, das einen Milchsäurebakterienkulturgehalt von 0,001 bis 0,5 Gew.-% aufweist.

11. Abgeseihtes fermentiertes Molkereiprodukt nach einem der Ansprüche 8 bis 10, umfassend eine Fruchtzubereitung, wobei die Früchte ausgewählt sind aus der Gruppe Kirsche, Erdbeere, Pfirsich, Heidelbeere, Ananas, Himbeere, Aprikose, Kokosnuss, Passionsfrucht, Apfel oder einer Mischung.

12. Abgeseihtes fermentiertes Molkereiprodukt nach einem der Ansprüche 8 bis 11, das Fettkügelchen mit einem durchschnittlichen Durchmesser im Bereich von 0,05 bis 10 µm, insbesondere von 1 µm bis 2,5 µm aufweist.

## Revendications

1. Procédé pour la fabrication d'un produit laitier fermenté et égoutté, comprenant au moins les étapes suivantes :
- une étape de traitement préchauffage à une température de 75 à 95 °C d'un matériau laitier ayant une teneur en matières grasses de 0 à 2 % en poids,
- une étape d'homogénéisation à une pression de 25 bars à 300 bars dudit matériau laitier,
- une étape de traitement thermique à une température de 90 à 95 °C pendant 2 à 7 minutes,
- une étape de fermentation avec au moins *Streptococcus thermophilus* et *Lactobacillus delbrueckii subsp. bulgaricus* à une température de 35 à 44 °C pendant 4 à 7 heures,
- une étape de traitement thermique à une température de 50 à 65 °C pendant de 1 à 10 min,
- une étape de séparation dans lequel ladite étape de séparation est réalisée par un séparateur à une température de 30 à 45 °C, pour obtenir un produit laitier fermenté et égoutté, dans lequel la teneur totale en protéine se situe entre 6 et 14 g/100 g de produit,
- une étape de lissage réalisée par un mélangeur rotor-stator,
- une étape de refroidissement à une température de 15 à 20 °C.

2. Procédé selon la revendication 1, dans lequel le matériau laitier a une teneur en matières grasses de 0,05 à 1 %, plus particulièrement de 0,1 à 0,3 % en poids.

3. Procédé selon la revendication 1 ou 2, dans lequel le matériau laitier a une teneur en protéine de 3 à 4,6 %, en particulier de 3,1 à 4 %, plutôt de 3,2 à 3,6 % en poids.

4. Procédé selon l'une quelconque des revendications précédentes, **caractérisé en ce qu'**il comprend, après l'étape de lissage (d), une étape d'addition d'un matériau à base de crème et/ou d'une préparation à base de fruits.

5. Procédé selon l'une quelconque des revendications précédentes, dans lequel le matériau à base de crème a une teneur en matière grasse de 20 à 50 % en poids, en particulier de 23 à 40 % en poids.

6. Procédé selon l'une quelconque des revendications précédentes, dans lequel le matériau à base de crème est préparé par au moins les étapes suivantes :
- préchauffage à une température de 75 à 95 °C,
- homogénéisation du matériau préchauffé obtenu, dans une étape unique à une pression de 150 bars,
- traitement thermique à 75 à 142 °C pendant 10 sec à 6 min,
- refroidissement à 4 à 10 °C.

7. Procédé selon l'une quelconque des revendications précédentes, comprenant au moins les étapes suivantes :
- une étape de traitement préchauffage à une température de 75 à 95 °C d'un matériau laitier,
- une étape d'homogénéisation à une pression de 50 bars à 250 bars, dudit matériau laitier,
- une étape de traitement thermique à une température de 90 à 95 °C pendant 2 à 7 minutes,
- une étape de fermentation avec au moins *Streptococcus thermophilus* et *Lactobacillus delbrueckii subsp. bulgaricus* à une température de 35 à 44 °C, de préférence de 36 à 42 °C, pendant 4 à 7 heures,
- une étape de traitement thermique à une température de 58 °C pendant 2,5 min,
- une étape de séparation dans lequel ladite étape de séparation est réalisée par un séparateur à une température de 30 à 45 °C, pour obtenir un produit laitier fermenté et égoutté, dans lequel la teneur totale en protéine se situe entre 8 et 11 g/100 g de produit,
- une étape de lissage réalisée par un mélangeur rotor-stator, en particulier à une température de 30 °C à 45 °C,
- une étape de refroidissement à une température de 15 à 20 °C.

8. Produit laitier fermenté et égoutté pouvant être obtenu par le procédé selon l'une quelconque des revendications 1 à 7, comprenant, en poids du produit final :
- de 0 à 5 % de matières grasses, en particulier de 2 à 3,5 % de matières grasses, plus particulièrement 2,9 % de matières grasses, et
- de 6 à 12 % de protéines, en particulier de 7 à 10 % de protéines, plus particulièrement de 9 % de protéines,
dans lequel ledit produit laitier fermenté et égoutté :
- a de 1.10⁵ à 3.10⁶ ufc/ml de *Lactobacillus delbrueckii subsp. bulgaricus* et de 1.10⁸ à 3.10⁹ ufc/ml de *Streptococcus thermophilus* pendant toute la durée de conservation, en particulier pendant 28 jours,
- a un pH de 3,9 à 4,4, en particulier de 3,95 à 4,3, plus particulièrement de 4 à 4,2,
- a une viscosité de 2000 à 7000 mPa.s⁻¹, en particulier de 2200 à 6500 mPa.s⁻¹, plus particulièrement de 2500 à 6000 mPa.s⁻¹, mesurée avec un dispositif Rheomat RM 200 à une température de 10 °C et à un cisaillement de 64 s⁻¹.

9. Produit laitier fermenté et égoutté selon la revendication 8, ayant une teneur en masse blanche de 75 à 99,99 % en poids.

10. Produit laitier fermenté et égoutté selon les revendications 8 ou 9, ayant une teneur de culture de bactéries d'acide lactique de 0,001 à 0,5 % en poids.

11. Produit laitier fermenté et égoutté selon l'une quelconque des revendications 8 à 10, comprenant une préparation à base de fruits, dans lequel les fruits sont choisis dans le groupe comprenant la cerise, la fraise, la pêche, la myrtille, l'ananas, la framboise, l'abricot, la noix de coco, le fruit de la passion, la pomme ou un mélange.

12. Produit laitier fermenté et égoutté selon l'une quelconque des revendications 8 à 11, ayant des globules de matière grasse présentant un diamètre moyen dans la plage de 0,05 à 10 µm, en particulier de 1 µm à 2,5 µm.
